# EUROPÄISCHE PATENTSCHRIFT

(11) **EP 3 448 654 B1**
(45) Veröffentlichungstag und Bekanntmachung des Hinweises auf die Patenterteilung: **26.02.2025**
(21) Anmeldenummer: 17720441.9
(22) Anmeldetag: 25.04.2017
(51) Int. Cl.: B29C 49/42, B29C 49/64, B29C 49/06, B29L 31/00

(54) **VORRICHTUNG UND VERFAHREN ZUM BEHANDELN VON KUNSTSTOFFBEHÄLTNISSEN, INSBESONDERE MITTELS LANGSTATOREN**
DEVICE AND METHOD FOR TREATING PLASTIC CONTAINERS, IN PARTICULAR BY MEANS OF LONG STATORS
DISPOSITIF ET PROCÉDÉ POUR LE TRAITEMENT DE RÉCIPIENTS EN MATÉRIAU SYNTHÉTIQUE, EN PARTICULIER AU MOYEN DE STATORS LONGITUDINAUX

(30) Priorität: 25.04.2016 DE 102016107588
(43) Veröffentlichungstag der Anmeldung: 06.03.2019
(73) Patentinhaber: Krones AG, 93073 Neutraubling (DE)
(72) Erfinder: VOTH, Klaus, 93073 Neutraubling (DE); HANDSCHUH, Eduard, 93073 Neutraubling (DE)
(74) Vertreter: Hannke Bittner & Partner mbB Regensburg
(86) Internationale Anmeldenummer: PCT/EP2017/059834
(87) Internationale Veröffentlichungsnummer: WO 2017/186742

(56) Entgegenhaltungen:
- EP-A1- 2 848 382
- DE-A1- 102010 018 153
- DE-A1- 102013 105 687
- DE-A1- 102014 115 302

## Beschreibung

Die vorliegende Erfindung bezieht sich auf eine Vorrichtung und ein Verfahren zum Behandeln von Kunststoffbehältnissen. Insbesondere in der getränkeherstellenden Industrie ist es seit langem bekannt, dass zur Herstellung von Kunststoffflaschen zunächst sogenannte Kunststoffvorformlinge erwärmt werden und diese so erwärmten Kunststoffvorformlinge mittels Umformungseinrichtungen, wie beispielsweise Streckblasmaschinen, zu Kunststoffflaschen umgeformt werden. Zum Erwärmen dieser Kunststoffvorformlinge sind dabei unterschiedliche Vorgehensweisen bekannt. So sind beispielsweise Infrarotöfen bekannt, durch welche die Kunststoffvorformlinge hindurch transportiert und erwärmt werden. Dabei sind sogenannte Heizdorne vorgesehen, welche in eine Mündung der Kunststoffvorformlinge eintauchen und welche wiederum an Ketten angeordnet sind.

Dabei wird durch eine Teilung dieser Kette bzw. der einzelnen Haltedorne auch der Abstand vorgegeben und ist daher nicht veränderbar. Wie erwähnt, werden die erwärmten Kunststoffvorformlinge später mittels einer Blasformmaschine zu Kunststoffflaschen umgeformt. Hierzu ist es erforderlich, die Teilungen der einzelnen Kunststoffvorformlinge (d.h. deren gegenseitigen Abstand) zu erhöhen. Im Stand der Technik erfolgt dies üblicherweise mit sogenannten Teilungsverzugssternen, welche die Kunststoffvorformlinge vereinzelt greifen und deren Teilung erhöhen. Daneben sind auch Lösungen bekannt, bei denen die Heizdorne mittels einer linearen Schnecke auf eine erhöhte Teilung gebracht werden.

Aus der DE 10 2014 115 302 A1 ist beispielsweise eine Vorrichtung zum Transportieren von Kunststoffvorformlingen mit zweifachem Teilungsverzug bekannt und aus der EP 2 848 382 A1 eine Behälterbehandlungsanlage mit einem Ofen und einer Blasromvorrichtung mit Individual-Antrieb von Trägern für Vorformlingen.

Weiterhin beschreibt beispielsweise auch die DE 10 2013 105 687 A1 eine Vorrichtung zum Transportieren von Behältnissen mit magnetischem Antrieb und die DE 10 2010 018 153 A1 eine Transporteinrichtung und ein Transportverfahren für Behälterbehandlungsanlagen.

Der vorliegenden Erfindung liegt daher die Aufgabe zugrunde, Vorrichtungen und Verfahren zur Verfügung zu stellen, welche eine vereinfachtere Handhabung derartiger Prozesse ermöglichen. Insbesondere soll eine Möglichkeit geschaffen werden, um die besagten Teilungen leichter erhöhen zu können.

Diese Aufgaben werden erfindungsgemäß durch die Gegenstände der unabhängigen Ansprüche erreicht. Vorteilhafte Ausführungsformen und Weiterbildungen sind Gegenstand der Unteransprüche.

Eine erfindungsgemäße Vorrichtung zum Behandeln von Behältnissen und insbesondere von Kunststoffbehältnissen weist eine erste Transporteinrichtung auf, welche einen umlaufenden Träger aufweist, an dem eine erste Vielzahl von Transportelementen (insbesondere beweglich gegenüber diesem Träger) angeordnet ist, welche jeweils wenigstens ein Haltemittel zum Halten von Kunststoffvorformlingen aufweisen und welche dazu geeignet und bestimmt sind, diese Kunststoffvorformlinge entlang eines ersten Transportpfades zu transportieren. Weiterhin weist die Vorrichtung wenigstens eine Erwärmungseinrichtung auf, welche insbesondere entlang des ersten Transportpfades angeordnet ist, um die Kunststoffvorformlinge wenigstens abschnittsweise während ihres Transports entlang des ersten Transportpfades zu erwärmen.

Erfindungsgemäß weist die Vorrichtung eine zweite umlaufende Transporteinrichtung auf, welche einen zweiten umlaufenden Träger aufweist, an dem eine zweite Vielzahl von Transportelementen angeordnet ist, welche jeweils wenigstens ein Haltemittel zum Halten der Kunststoffvorformlinge aufweisen und welche dazu geeignet und bestimmt sind, diese Kunststoffvorformlinge entlang eines zweiten Transportpfades zu transportieren. Dabei verläuft der zweite Transportpfad wenigstens abschnittsweise parallel zu dem ersten Transportpfad.

Weiterhin sind an wenigstens einem Träger erste magnetische Antriebsmittel angeordnet, welche mit zweiten an den an diesem Träger angeordneten jeweiligen Transportelementen befindlichen magnetischen Antriebsmitteln zusammenwirken, um diese Transportelemente (insbesondere gegenüber dem Träger) zu transportieren und/oder diese wenigstens einen Transportelemente sind voneinander unabhängig gegenüber dem ersten Träger bewegbar. Bevorzugt ist jedoch eine Abfolge bzw. Reihenfolge der an den jeweiligen Trägern angeordneten Transportelementen festgelegt bzw. variiert nicht. Bevorzugt sind die Transportelemente zwar beweglich jedoch besonders bevorzugt nicht entfernbar an dem Träger angeordnet. Bevorzugt werden die einzelnen Transportelemente durch den jeweiligen Träger an dem sie angeordnet sind, derart geführt, dass sie sich entlang eines insbesondere umlaufenden Transportpfads bewegen. Bevorzugt verläuft dieser Transportpfad in einer (insbesondere horizontalen) Ebene.

Bevorzugt wird durch den parallelen Verlauf der Transporteinrichtungen erreicht, dass einem bestimmten Kunststoffvorformling wenigstens zeitweise während seines Transports sowohl ein Transportelement der ersten Transporteinrichtung als auch ein Transportelement der zweiten Transporteinrichtung zugeordnet ist. Erfindungsgemäß wird dieser Kunststoffvorformling zeitweise sowohl von einem Halteelement der ersten Transporteinrichtung als auch von einem Halteelement der zweiten Transporteinrichtung gehalten wird. Bevorzugt ist die Anzahl der zweiten Transportelemente größer als die Anzahl der ersten Transportelemente.

Es werden daher im Rahmen der Erfindung zwei zueinander zumindest teilweise parallele Transporteinrichtungen vorgeschlagen, welche bevorzugt jeweils eine unabhängige Bewegung der jeweiligen Haltemittel erlauben. Durch diese Ausgestaltung der unabhängigen Bewegbarkeit ist es möglich, den gewünschten Teilungsverzug ohne hohen mechanischen Aufwand durchzuführen. Mit anderen Worten wird vorgeschlagen, dass ein umlaufender Träger, insbesondere ein Langstatorsystem, verwendet wird, welches einzelne Haltemittel bzw. Transportelemente trägt. Teilweise parallel zu dieser ersten Transporteinrichtung ist eine zweite Transporteinrichtung vorgesehen, welche ebenfalls dazu geeignet und bestimmt ist, die Kunststoffvorformlinge zu greifen. Damit sind besonders bevorzugt zwei derartige Transporteinrichtungen und insbesondere Statorkreise übereinander angeordnet. Bevorzugt ist wenigstens einer der beiden Träger stationär angeordnet. Bevorzugt sind beide Träger stationär angeordnet.

Dabei sind besonders bevorzugt entlang des besagten Abschnittes, in dem der erste Transportpfad parallel zu dem zweiten Transportpfad verläuft, die beiden Halteelemente jeweils in der Lage, jeweils einzelne Kunststoffvorformlinge zu halten. Damit werden besonders bevorzugt entlang dieses Abschnittes bzw. wenigstens eines Teils dieses Abschnittes die Kunststoffvorformlinge von beiden Halteelementen gehalten (bzw. können zumindest an diesen Abschnitten gehalten werden). Damit wird durch die Erfindung eine Möglichkeit geschaffen, beliebig die Teilungen zu verändern und sogar einen teilweise getakteten Betrieb der einzelnen Kunststoffvorformlinge bzw. einen getakteten Transport der Kunststoffvorformlinge zu ermöglichen.

Bei einer weiteren vorteilhaften Ausführungsform ist der zweite Transportpfad unterhalb des ersten Transportpfades und/oder seitlich gegenüber diesem ersten Transportpfad versetzt. Dabei kann der erste Transportpfad, d.h. der der ersten Transporteinrichtung zugeordnete Transportpfad, als Heizkreis ausgestaltet sein, der zum Erwärmen der Kunststoffvorformlinge dient. Dabei können in dieser Transporteinrichtung die einzelnen Haltemittel beispielsweise als Dorne ausgestaltet sein, welche in die Mündungen der Kunststoffvorformlinge einführbar sind. Der zweite Transportpfad kann - wie oben erwähnt - ebenfalls die bewegbaren Halteelemente aufweisen, welche beispielsweise die Kunststoffvorformlinge greifen können, beispielsweise unterhalb deren Tragringe greifen können.

Durch die hier beschriebene Vorgehensweise ist es möglich, beliebig die Teilung zwischen den Kunststoffvorformlingen zu verändern, ohne hierzu mechanische Mittel einzusetzen. Insbesondere sind entsprechende Teilungen elektronisch einstellbar bzw. veränderbar.

Bei einer weiteren vorteilhaften Ausführungsform können die einzelnen Halteelemente Räder aufweisen, um die Halteelemente gegenüber den Trägern zu führen. Die eigentliche Fortbewegung erfolgt - wie oben erwähnt - insbesondere durch magnetische Kräfte. Bei den magnetischen Mitteln, welche diese Bewegung erzeugen, kann es sich insbesondere um Elektromagnete oder Permanentmagnete handeln. Bevorzugt sind an den Trägern Elektromagnete angeordnet und an den Transportelementen jeweils Permanentmagnete.

Daneben kann die Vorrichtung jedoch auch Energieübertragungsmittel aufweisen, um elektrische Energie von dem Träger auf die einzelnen Transportelemente zu übertragen. Daneben können auch Übertragungseinrichtungen vorgesehen sein, um beispielsweise Steuersignale von dem Träger auf die einzelnen Transportelemente übertragen zu können. Auf diese Weise können auch auf den Transportelementen befindliche Antriebselemente sowohl mit Strom versorgt als auch gesteuert werden. Bei diesen Energieübertragungsmitteln kann es sich etwa um Schleifkontakte handeln. Auch kann eine Energieübertragung über die Räder erfolgen, welche bevorzugt gegenüber den einzelnen Trägern abrollen.

Bei einer weiteren vorteilhaften Ausführungsform sind an dem anderen Träger weitere erste magnetische Antriebsmittel angeordnet, welche mit weiteren zweiten an den jeweiligen Transportelementen angeordneten magnetischen Antriebsmitteln zusammenwirken, um diese Transportelemente zu transportieren. Alternativ oder zusätzlich wäre es auch möglich, dass auch die zweiten Haltemittel bzw. die zweiten Transportelemente unabhängig voneinander gegenüber dem zweiten Träger bewegbar sind.

Unter einer unabhängigen Bewegbarkeit der einzelnen Transportelemente wird dabei verstanden, dass insbesondere eine Teilung bzw. ein Abstand eines bestimmten Transportelementes zu einem vorausgehenden und/oder nachfolgenden Transportelement beliebig eingestellt werden kann. So wäre es beispielsweise möglich, dass ein erstes Transportelement zeitweise langsamer bewegt wird als ein zweites Transportelement, welches jedoch ebenfalls an dem gleichen Träger angeordnet ist.

Bei einer weiteren vorteilhaften Ausführungsform unterscheiden sich der erste Transportpfad und der zweite Transportpfad wenigstens abschnittsweise voneinander. Vorteilhaft ist der zweite Transportpfad länger als der erste Transportpfad. Bevorzugt sind jedoch auch wenigstens zwei zueinander parallele Abschnitte des ersten Transportpfads parallel zu wenigstens zwei zueinander parallelen Abschnitten des zweiten Transportpfads. Vorteilhaft werden die Kunststoffvorformlinge in diesen zueinander parallelen Abschnitten der beiden Transportpfade in einander entgegengesetzten Richtungen transportiert.

Bei einer weiteren vorteilhaften Ausführungsform ist wenigstens einer der beiden Transportpfade oval ausgebildet. So kann dieser wenigstens eine Transportpfad beispielsweise zwei geradlinig verlaufende Abschnitte aufweisen und jeweils zwei Umlenkabschnitte, in denen die Bewegungsrichtung der Kunststoffvorformlinge um 180° gedreht wird. Vorteilhaft sind beide Transportpfade ovalförmig ausgebildet.

Für einen Ablauf eines erfindungsgemäßen Verfahrens wäre es möglich, dass zunächst ein Transportelement (im Folgenden auch als "Mover" bezeichnet) mittels einer Greifeinrichtung einen Kunststoffvorformling abholt, diesen in eine Heizeinrichtung bzw. einen Ofen einfährt und parallel hierzu mittels der ersten Transporteinrichtung oberhalb der Mündung des Kunststoffvorformlings ein Dorn über die Mündung fährt und in diese eingeschoben wird. Sobald der Kunststoffvorformling von diesem Dorn gehalten wird, können sich Haltemittel der weiteren Transporteinrichtung wie beispielsweise Greifzangen öffnen, um so beispielsweise auch eine Bewegung des Kunststoffvorformlings in Form einer Drehung zu ermöglichen.

Auf diese Weise wird innerhalb der eigentlichen Heizeinrichtung eine variable Dornteilung ermöglicht. Vorteilhaft ist entlang des ersten Transportpfades der Kunststoffvorformlinge eine Vielzahl von Heizelementen und insbesondere Infrarotheizelementen vorgesehen. Es wäre jedoch auch die Verwendung eines Mikrowellenofens denkbar, bei dem einzelne Kunststoffvorformlinge jeweils in Mikrowellenresonatoren eingefahren und dort erwärmt werden.

Neben der beschriebenen variablen Teilung zwischen den einzelnen Transportelementen bzw. den Haltedornen ist innerhalb des Ofens bevorzugt auch eine Drehzahl variabel einstellbar. Auch kann während der eigentlichen Heizphase der Kunststoffvorformling nicht von dem Halteelement bzw. dem Dorn fallen. Dies kann beispielsweise über eine Sicherung erreicht werden, welche durch die zweite Halteeinrichtung, wie etwa eine Greifzange, auf die unterhalb angeordneten Haltemittel wirkt. Daneben ist auch keine weitere Übergabe der Kunststoffvorformlinge nach der Erwärmung nötig, da diese bereits von den zweiten Halteelementen übernommen werden können. Daneben kann das erste Haltemittel, wie beispielswiese eine Greifzange, auch bereits zur Wärme- oder Strahlungsabschirmung dienen, um so eine übermäßige Erwärmung der Mündung der Kunststoffvorformlinge zu verhindern.

Bei einer weiteren vorteilhaften Ausführungsform weist die Vorrichtung eine Umformungseinrichtung auf, welche entlang des zweiten Transportpfades angeordnet ist und welche dazu geeignet und bestimmt ist, die Kunststoffvorformlinge zu Kunststoffbehältnissen umzuformen. Hierbei kann es sich beispielsweise um eine Blasformmaschine und insbesondere eine Streckblasmaschine handeln, welche Blasformen aufweist, innerhalb derer die Kunststoffvorformlinge, insbesondere mittels Druckluft, zu den Kunststoffbehältnissen geblasen werden. Zu diesem Zweck könnte die Umformungseinrichtung eine Vielzahl derartiger Blasformen aufweisen, welche jeweils Beaufschlagungseinrichtungen, wie Blasdüsen, aufweisen, welche die erwärmten Kunststoffvorformlinge mit Druckluft beaufschlagen.

Vorteilhaft sind bei dieser Ausgestaltung mehrere derartiger Umformungsstationen nebeneinander und insbesondere stationär angeordnet. Weiterhin können die einzelnen Umformungsstationen auch stangenartige Körper aufweisen, welche in die Kunststoffvorformlinge einführbar sind, um diese in der Längsrichtung zu dehnen. Wie oben erwähnt, erlaubt die vorliegende Erfindung auch einen getakteten Transport der Kunststoffvorformlinge. Bei dieser Ausgestaltung ist es vorteilhaft möglich, dass die Kunststoffvorformlinge in diese stationären Umformungsstationen eingefahren und dort mittels Druckluft beaufschlagt werden. Vorteilhaft weist also die Umformungseinrichtung eine Vielzahl von stationär angeordneten Umformungsstationen auf. Unter "stationär" wird hier verstanden, dass diese Umformungsstationen nicht, wie teilweise im Stand der Technik üblich, beweglich beispielsweise auf einem Blasrad befördert werden, sondern stationär angeordnet sind.

Diese stationäre Anordnung erlaubt ein technisch vereinfachtes Design, beispielsweise hinsichtlich der Zuführung von elektrischer Energie, hinsichtlich der Zuführung von Steuersignalen und auch hinsichtlich der Zuführung von Blasluft. Daneben kann eine Produktionsleistung einer derartigen Vorrichtung etwa durch die Anzahl der Umformungsstationen geändert werden. Auch können an bereits bestehende Anlagen weitere Umformungsstationen hinzugefügt werden.

Bei einer weiteren vorteilhaften Ausführungsform ist daher wenigstens eine Transporteinrichtung dazu geeignet und bestimmt, die Kunststoffvorformlinge getaktet zu transportieren, d.h. die Kunststoffvorformlinge auch mit zumindest vorübergehenden Stillstandphasen zu transportieren. Bevorzugt handelt es sich hierbei um die zweite Transporteinrichtung. Bevorzugt sind beide Transporteinrichtungen dazu geeignet und bestimmt, die Kunststoffvorformlinge getaktet zu transportieren.

Bei einer weiteren vorteilhaften Ausführungsform handelt es sich bei der Transporteinrichtung, welche die ersten Halteelemente, bei denen es sich insbesondere um Heizdorne handelt, transportiert, um ein Langstatorsystem. Mittels der zweiten Transporteinrichtung, welche bevorzugt ebenfalls als Langstatorsystem ausgebildet ist, können die Kunststoffvorformlinge zu einer Schließeinheit und/oder Umformungsstation übergeben werden. Vorteilhaft werden zumindest abschnittsweise die ersten Halteelemente und die zweiten Halteelemente parallel zueinander bewegt. Dabei kann jedem ersten Halteelement ein zweites Halteelement zugeordnet sein und der Kunststoffvorformling kann von diesen beiden Halteelementen gemeinsam geführt sein. Vorteilhaft handelt es sich bei den Halteelementen wenigstens teilweise um aktive Haltelemente, beispielsweise um Greifklammern, die aktiv geöffnet und geschlossen werden können.

Dabei kann weiterhin eine Teilung der ersten Transportelemente gegenüber dem ersten Träger sowie der zweiten Halteelemente gegenüber dem zweiten Träger elektronisch einstellbar sein und insbesondere in den Bereichen, in denen lediglich eine Transporteinrichtung, wie beispielsweise die zweite Transporteinrichtung, vorhanden sind, auch unterschiedlich gewählt werden.

Bei einer weiteren vorteilhaften Ausführungsform weist die Vorrichtung eine Kopplungseinrichtung auf, welche zumindest zeitweise eine Kopplung von ersten Halteelementen, welche gegenüber dem ersten Träger bewegbar sind und zweiten Halteelementen, welche gegenüber dem zweiten Träger bewegbar sind, koppelt. So ist es beispielsweise möglich, dass durch eine Einfahrbewegung eines Dorns in die Mündung der Kunststoffvorformlinge auch die beiden Transportelemente, welche an den beiden unterschiedlichen Trägern angeordnet sind, miteinander gekoppelt werden.

Daneben wäre es auch möglich, dass eine Kopplung der jeweiligen Halteelemente derart erfolgt, dass beispielsweise durch eine Bewegung des Dorns in eine Mündung der Kunststoffvorformlinge gleichzeitig ein Griff des zweiten Haltemittels gelöst wird, so dass der Kunststoffvorformling nunmehr frei drehbar ist.

Bei einer weiteren vorteilhaften Ausführungsform ist es auch denkbar, dass eine weitere Antriebseinrichtung vorhanden ist, welche eine Bewegung eines Haltedorns in seiner Längsrichtung, d.h. in die Mündung der Kunststoffvorformlinge hinein und/oder aus den Mündungen der Kunststoffvorformlinge heraus bewirkt. Zu diesem Zwecke könnten beispielsweise Führungskurven vorgesehen sein. Auf diese Weise kann erreicht werden, dass die Dorne jeweils an bestimmten Positionen in die Kunststoffvorformlinge eintauchen und auch an bestimmten Positionen wieder aus den Kunststoffvorformlingen herausgeführt werden.

Daneben könnte ein elastisches Mittel vorgesehen sein, welches die Haltemittel, wie beispielsweise Haltedorne, in eine bestimmte Position drängt, beispielsweise in eine Position, in der sie aus den Kunststoffvorformlingen heraustreten bzw. aus diesen herausgezogen werden.

Bei einer weiteren vorteilhaften Ausführungsform kann die Vorrichtung auch eine zentrale Antriebseinrichtung aufweisen, welche sämtliche Haltemittel, wie Haltedorne, in eine Drehbewegung versetzt. So könnte beispielsweise an jedem dieser Haltedorne ein Riemenrad vorgesehen sein, welches an einem (beispielsweise stationären) Riemen abläuft und so in Drehung versetzt wird. Es wäre jedoch auch möglich, dass jedes einzelne Haltemittel und insbesondere jeder einzelne Haltedorn seinen eigenen Antrieb aufweist.

Weiterhin wäre es auch denkbar, dass eine Steuerungseinrichtung eine Drehzahl der ersten Halteelemente, wie beispielsweise Haltedorne, steuert. Dabei kann eine derartige Information, wie beispielsweise eine Information über die Drehzahl, auch von den zweiten Halteelementen, beispielsweise Greifelementen, ausgegeben werden.

Daneben wäre es auch möglich, dass einer der beiden Träger nur teilweise entlang des Transportpfades Antriebsmittel wie magnetische Antriebsmittel aufweist bzw. auch keine und die Halteelemente gegenüber dem Träger zwar beweglich sind, aber die Bewegung durch die zweiten Halteelemente, die an dem anderen Träger ablaufen, erzeugt wird. Dabei kann wenigstens zeitweise eine mechanische Kopplung zwischen den betreffenden Halteelementen bzw. Transportelementen bestehen. Diese Kopplung kann dabei über den zu transportierenden Kunststoffvorformling vermittelt werden aber auch durch zusätzliche mechanische Elemente, welche beispielsweise durch eine Bewegung eines Haltedorns oder einer Greifklammern diese Verbindung zwischen den Transportelementen herstellen können.

Bei einer weiteren vorteilhaften Ausführungsform ist wenigstens ein Haltemittel und insbesondere ein zweites Haltemittel dazu geeignet und bestimmt, den Kunststoffvorformling über einen Trag- bzw. Stützring zu greifen.

Vorteilhaft weist jedes Halteelement wenigstens zwei Räder auf, welche das Halteelement gegenüber dem Träger bewegbar lagern und bevorzugt wenigstens vier Räder. Bevorzugt weisen die Halteelemente wenigstens sechs Räder auf, um das Halteelement gegenüber dem Träger beweglich zu lagern. Vorteilhaft sind dabei diese Räder wenigstens teilweise in einer vertikalen Richtung übereinander angeordnet. Vorteilhaft sind auch übereinander angeordnete Räder der Halteelemente in einer Bewegungsrichtung zueinander versetzt. Bei einer weiteren vorteilhaften Ausführungsform ist der Träger modular aufgebaut. Durch diese modulare Bauweise können unterschiedliche Trägerlängen realisiert werden und dadurch beispielsweise auch unterschiedliche Heizstrecken. So kann sich beispielsweise der Träger aus einer Vielzahl von geraden und gekrümmten Segmenten zusammensetzen, so dass auch eine Formgebung des Trägers im Wesentlichen beliebig angepasst werden kann.

Erfindungsgemäß sind die ersten Haltemittel dazu geeignet und bestimmt, die Kunststoffvorformlinge an einem ersten Bereich der Kunststoffvorformlinge zu greifen und die zweiten Haltemittel sind dazu geeignet und bestimmt, die Kunststoffvorformlinge an einem zweiten Bereich der Kunststoffvorformlinge zu greifen, wobei sich die ersten Bereiche und die zweiten Bereiche voneinander unterscheiden. Wie ausgeführt, kann es sich bei dem ersten Haltemittel um Dorne handeln, welche in die Mündungen der Kunststoffvorformlinge eingreifen und welche diese daher von innen her greifen. Bei den zweiten Haltemitteln kann es sich - wie oben erwähnt - um Greifelemente handeln, welche die Kunststoffvorformlinge an ihrem Außenumfang greifen.

Vorteilhaft sind wenigstens die ersten Haltemittel in ihrer Längsrichtung bewegbar, um so in die Mündungen der Kunststoffvorformlinge eingeführt zu werden. Bevorzugt handelt es sich bei dieser Längsrichtung auch um eine Längsrichtung der zu behandelnden Kunststoffvorformlinge.

Bei einer weiteren vorteilhaften Ausführungsform ist der erste Transportpfad oberhalb des zweiten Transportpfades angeordnet. Daneben wäre jedoch auch ein seitlicher Versatz der beiden Transportpfade möglich.

Vorteilhaft ist wenigstens ein erstes Haltemittel drehbar angeordnet, derart, dass eine Drehung der Kunststoffvorformlinge bezüglich deren Längsrichtung bewirkt wird.

Die vorliegende Erfindung ist weiterhin auf ein Verfahren zum Behandeln von Kunststoffbehältnissen gerichtet, wobei Kunststoffvorformlinge mittels einer ersten Transporteinrichtung entlang eines ersten vorgegebenen Transportpfades transportiert werden und diese erste Transporteinrichtung einen ersten umlaufenden Träger aufweist, entlang dessen sich erste Transportelemente mit Haltemitteln zum Halten der Kunststoffvorformlinge bewegen. Weiterhin werden die Kunststoffvorformlinge wenigstens teilweise und/oder wenigstens zeitweise während ihres Transportes entlang des ersten Transportpfades erwärmt. Weiterhin werden die Kunststoffvorformlinge mittels einer zweiten Transporteinrichtung entlang eines zweiten Transportpfades transportiert.

Erfindungsgemäß verlaufen der erste Transportpfad und der zweite Transportpfad wenigstens abschnittsweise parallel und bevorzugt verläuft der Transport entlang des zweiten Transportpfades wenigstens abschnittsweise und/oder zeitweise getaktet.

Es wird daher auch verfahrensseitig vorgeschlagen, dass zwei insbesondere parallele Transportpfade vorgesehen sind, wobei zumindest bei einem Transport eines der beiden Transportpfade getaktet transportiert wird, insbesondere, um so die Kunststoffvorformlinge auch weiterbehandeln zu können.

Besonders bevorzugt werden die Kunststoffvorformlinge während ihres Transports mit der zweiten Transporteinrichtung mittels einer Umformungseinrichtung zu Kunststoffbehältnissen umgeformt. Insbesondere erfolgt ein derartiges Umformen dabei durch einen Blasformprozess, d.h. insbesondere werden die Kunststoffvorformlinge mit einem gasförmigen Medium und insbesondere mit Druckluft zu ihrer Umformung beaufschlagt. Bevorzugt werden hierzu mittels der zweiten Transporteinrichtung die Kunststoffvorformlinge jeweils in Blasstationen eingefahren und anschließend wird der Transport angehalten. In diesem Zustand können die Blasformen geschlossen werden und die Kunststoffvorformlinge durch Beaufschlagung mit Druckluft expandiert werden.

Erfindungsgemäß werden die Kunststoffvorformlinge wenigstens zeitweise von Haltemitteln der ersten Transporteinrichtung und von Haltemitteln der zweiten Transporteinrichtung gehalten. Vorteilhaft werden die Kunststoffvorformlinge von Haltemitteln der zweiten Transporteinrichtung an Haltemittel der ersten Transporteinrichtung übergeben. Vorteilhaft werden die Kunststoffvorformlinge (insbesondere zu einem späteren Zeitpunkt von Haltemitteln der ersten Transporteinrichtung an Haltemittel der zweiten Transporteinrichtung übergeben. Bevorzugt werden die Kunststoffvorformlinge allgemein von einer Transporteinrichtung an eine andere Transporteinrichtung (bzw. jeweils deren Transportelemente und/oder Halteelemente übergeben und (insbesondere zu einem späteren Zeitpunkt) wieder von dieser erstgenannten Transporteinrichtung übernommen und weitertransportiert.

Bei einem bevorzugten Verfahren wäre es dabei möglich, dass zunächst die Haltemittel der zweiten Transporteinrichtung, wie etwa Greifelemente, noch die Kunststoffvorformlinge halten. Während dieses Halts können Haltemittel der ersten Transporteinrichtung, wie beispielsweise Haltedorne, in die Preform-Mündungen bzw. die Mündungs- und/oder Gewindeabschnitte der Kunststoffvorformlinge eintauchen. Sobald dies geschehen ist, können die zweiten Haltemittel ihren Griff lockern und so die Kunststoffvorformlinge zumindest für eine Drehung derselben freigeben. Dabei ist es auch möglich, dass durch eine derartige Bewegung der ersten Haltemittel, wie etwa Dorne, die Greifelemente der zweiten Halteelemente geöffnet werden. Weiterhin ist es möglich, dass zeitweise mit den zweiten Haltemitteln die ersten Haltemittel, beispielsweise Transportelemente, welche Dorne tragen, mitverschoben werden bzw. mitverfahren.

Bevorzugt erhalten die an der ersten Transporteinrichtung (bzw. dem Träger der ersten Transporteinrichtung) angeordneten Transportelemente Informationen über eine Drehzahl der Kunststoffvorformlinge von den an dem Träger der zweiten Transporteinrichtung angeordneten Transportelementen. Weiterhin weist die Vorrichtung und insbesondere die Transportelemente der ersten Transporteinrichtung eine Speichereinrichtung auf, in der Informationen gespeichert sind, insbesondere Informationen welche das zu behandelnde Produkt, etwa die zu behandelnden Kunststoffvorformlinge betreffen (wie etwa ein Material des Kunststoffvorformlings, eine abzufüllende Flüssigkeit und dergleichen).

Bei einem weiteren vorteilhaften Verfahren werden die Kunststoffvorformlinge mittels wenigstens einer Transporteinrichtung mittels magnetischer Kräfte bewegt. Hierbei können die jeweiligen Transporteinrichtungen die oben dargestellten Ausgestaltungen aufweisen, d.h. die Träger können als Langstatoren ausgebildet sein und die Halteelemente demgegenüber weitere magnetische Elemente, wie Permanentmagnete, aufweisen, so dass eine Fortbewegung ermöglicht wird. Vorteilhaft werden die Kunststoffvorformlinge mittels beider Transporteinrichtungen jeweils durch magnetische Kräfte bewegt.

Weitere Vorteile und Ausführungsformen ergeben sich aus den beigefügten Zeichnungen:
Darin zeigen:
- Fig. 1: eine schematische Darstellung einer Vorrichtung zum Herstellen von Behältnissen;
- Fig. 2: eine Darstellung von an dem Träger angeordneten zweiten Transportelementen; und
- Fig. 3: eine Darstellung von ersten und zweiten Halteelementen.

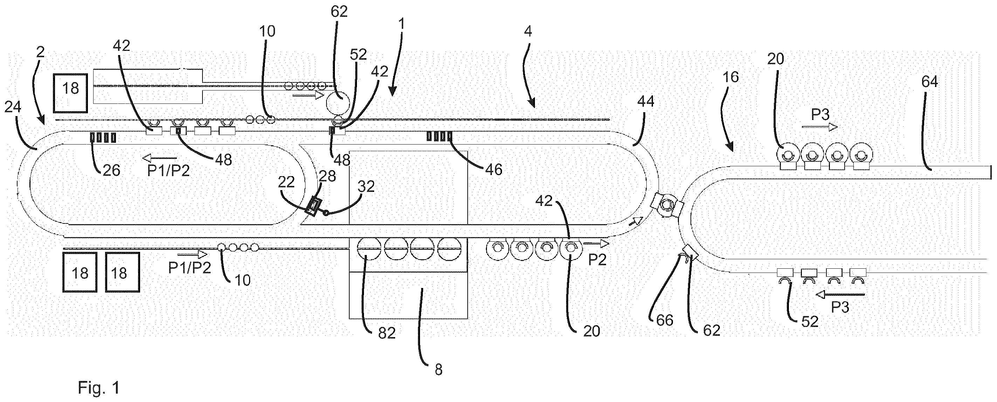

Figur 1 zeigt eine schematische Darstellung einer erfindungsgemäßen Vorrichtung 1 zum Behandeln von Kunststoffbehältnissen. Diese Vorrichtung weist dabei eine erste Transporteinrichtung 2 sowie eine zweite Transporteinrichtung 4 auf. Die erste Transporteinrichtung 2 weist einen umlaufenden Träger 24 auf, an dem eine Vielzahl von Transportelementen 22 bewegbar angeordnet ist, so dass diese ebenfalls um diesen stationären Träger 24 umlaufen können. Zum Antreiben dieser Transportelemente 22 weist der Träger eine Vielzahl von magnetischen Elementen 26, wie insbesondere Elektromagneten auf. Durch eine entsprechende Ansteuerung dieser Elektromagnete können die einzelnen Transportelemente, welche ebenfalls magnetische Elemente 28 (hier in Form von Permanentmagneten, hier nur eines gezeigt) aufweisen, fortbewegt werden.

An den jeweiligen Transportelementen 22 sind (unten genauer erläutert) Halteelemente 32 angeordnet, welche zum Halten der einzelnen Kunststoffvorformlinge 10 bestimmt sind. Bei diesen Halteelementen handelt es sich hier um Dorne, welche in die Mündungen der Kunststoffvorformlinge 10 einführbar sind.

Das Bezugszeichen 4 kennzeichnet eine zweite Transporteinrichtung, welche ebenfalls einen umlaufenden Träger 44 aufweist. An diesem umlaufenden Träger 44 sind ebenfalls Transportelemente 42 beweglich angeordnet. Die Transportelemente werden dabei ebenfalls mittels magnetischen Elementen 46, die an dem Träger 44 angeordnet sind, bewegt. Das Bezugszeichen 48 kennzeichnet an den Transportelementen 42 angeordnete magnetische Elemente, wie Permanentmagnete, welche zum Bewegen der Transportelemente 42 dienen. An diesen zweiten Transportelementen 42 sind jeweils Halteelemente 52, hier in Form von Greifklammern, angeordnet.

Die Bezugszeichen P1 und P2 kennzeichnen die Transportpfade, entlang derer die Transportelemente jeweils bewegt werden. Man erkennt, dass in dem linken Bereich die Transportelemente der ersten Transporteinrichtung 2 und der zweiten Transporteinrichtung 4 parallel gefördert werden. In diesem Bereich werden die Kunststoffvorformlinge erwärmt. Zu diesem Zweck weist die Vorrichtung eine Vielzahl von Erwärmungseinrichtungen 18 auf, die stationär entlang des Transportpfades P1 der Kunststoffvorformlinge 10 angeordnet sind. Bei diesen Erwärmungseinrichtungen 18 kann es sich hier etwa um Heizkästen handeln, welche entlang des Transportpfads P1 der Kunststoffvorformlinge angeordnet sind.

Nach ihrer Erwärmung werden die Kunststoffvorformlinge in eine in ihrer Gesamtheit mit 8 gekennzeichnete Umformungseinrichtung eingebracht. Diese Umformungseinrichtung weist hier vier hintereinander angeordnete Umformungsstationen 82 auf, die, anders als im Stand der Technik oftmals üblich, stationär angeordnet sind. Zum Einbringen der Kunststoffvorformlinge werden diese Umformungsstationen geöffnet, anschließend die Kunststoffvorformlinge eingefahren und dort (nach Schließen der Blasformen) durch Beaufschlagung mit Druckluft zu Kunststoffbehältnissen 20 expandiert. Dabei ist es möglich, dass die Blasformen der einzelnen Umformungsstationen an einem gemeinsamen Träger angeordnet sind und so gleichzeitig bzw. gemeinsam geöffnet und geschlossen werden. Auch auf diese Weise wird die Mechanik gegenüber bewegten Umformungsstationen vereinfacht.

Diese Kunststoffbehältnisse 20 werden an eine dritte Transporteinrichtung 16 übergeben. Auch diese dritte Transporteinrichtung 16 weist dabei eine Vielzahl von Transportelementen 62 auf, welche sich entlang des Transportpfades P3 bewegen. Dabei kann auch diese dritte Transporteinrichtung 16 wieder einen stationären Träger 64 aufweisen, der - wie oben beschrieben - durch Magnetkraft die einzelnen Transportelemente 62 mit den daran angeordneten Greifelementen 66 bewegt. Dabei ist auch ein Behältnis gezeigt, welches gerade von der zweiten Transporteinrichtung 4 an die dritte Transporteinrichtung 16 übergeben wird. Dabei ist es möglich, dass diese Übergabe bei sehr geringer Geschwindigkeit erfolgt, da, wie oben gesagt, die einzelnen Transportelemente auch mit variablen Geschwindigkeiten bewegt werden können

Damit sind hier jedenfalls die Träger 24 und 44 (bevorzugt jedoch auch der Träger 64) als Langstatoren ausgebildet. Bei einer weiteren vorteilhaften Ausführungsform ist es auch möglich, dass die einzelnen Transportelemente selbst Antriebsmittel, wie etwa Drehmotoren oder Hubmotoren, aufweisen die ebenfalls durch den Träger mit Energie versorgt werden.

Daher ist eine Teilung der ersten Transportelemente 22 bzw. der zweiten Transportelemente 42 einstellbar und insbesondere in dem Bereich, in dem lediglich die zweite Transporteinrichtung 4 vorhanden ist, unterschiedlich einstellbar, um so mit einer größeren Teilung die Kunststoffvorformlinge 10 der Umformungseinrichtung 8 zuzuführen.

Bei der erfindungsgemäßen Verfahrensweise werden die Kunststoffvorformlinge 10 zunächst den Greifelementen 52 der zweiten Transportelemente 42 zugeführt. Diese Transportelemente laufen in den Bereich ein, in dem die beiden Transportpfade P1 und P2 parallel zueinander angeordnet sind. In diesem Bereich kann nunmehr ein Dorn (nicht gezeigt) in die Preform-Mündung eintauchen und sich das Greifelement 52 leicht öffnen. Weiterhin ist es möglich, dass durch diese Hubbewegung des Haltedorns (nicht gezeigt), die beiden Transportelemente miteinander gekoppelt werden. Dabei können jedoch - wie oben erwähnt - die einzelnen Haltedorne jeweils über eigene Antriebe verfügen.

Daneben können (nicht gezeigt) Positionserfassungseinrichtungen vorgesehen sein, welche beispielsweise eine bestimmte Drehstellung der Kunststoffvorformlinge erfassen. Dies kann vorteilhaft sein, um beispielsweise nicht kreisförmige Behältnisse zu erzeugen. In demjenigen Bereich, in dem sich die beiden Transportpfade P1 und P2 überschneiden, ist es möglich, dass einer der beiden Träger nicht über magnetische Elemente verfügt und somit passiv ist. In diesem Bereich können die Transportelemente mittels des jeweiligen anderen Stators bzw. dessen magnetischer Elemente bewegt werden.

Vorteilhaft greifen die zweiten Halteelemente die Kunststoffvorformlinge mittels einer Zange insbesondere unterhalb deren Stützring. So können - wie oben erwähnt - die Kunststoffvorformlinge von den zweiten Transportelementen abgeholt werden, in den Ofen einfahren und parallel oberhalb der Mündung des Kunststoffvorformlings der Haltedorn in die Mündung einfahren. Anschließend kann sich die Zange bzw. das zweite Halteelement öffnen, beispielsweise um bis zwischen 1/10mm und 5/10mm, bevorzugt zwischen 1/10mm und 3/10mm und besonders bevorzugt zwischen 1/10 und 2/10 mm. Anschließend kann der jeweilige Haltedorn in Drehung versetzt werden. Auf diese Weise ist es möglich, in dem Ofen bzw. der Erwärmungseinrichtung eine variable Dornteilung einzusetzen. Auch ist der Dorn hinsichtlich seiner Drehung bevorzugt variabel einstellbar.

Durch das immer noch vorhandene zweite Halteelement in Form einer Greifzange kann auch ein Herabfallen des Kunststoffvorformlings verhindert werden, da das zweite Halteelement insoweit als Sicherung dient. Nach dem Ende der Erwärmung können die zweiten Halteelemente die Kunststoffvorformlinge wieder greifen und die Dorne aus den Kunststoffvorformlingen abgezogen werden. Durch diese Vorgehensweise ist jedoch von dem Ofen in die Umformungseinrichtung 8 keine weitere Übergabe der Kunststoffvorformlinge nötig. Auch kann - wie oben erwähnt - die Mündung der Kunststoffvorformlinge durch die Greifklammer gesichert insbesondere vor Überhitzung bewahrt werden.

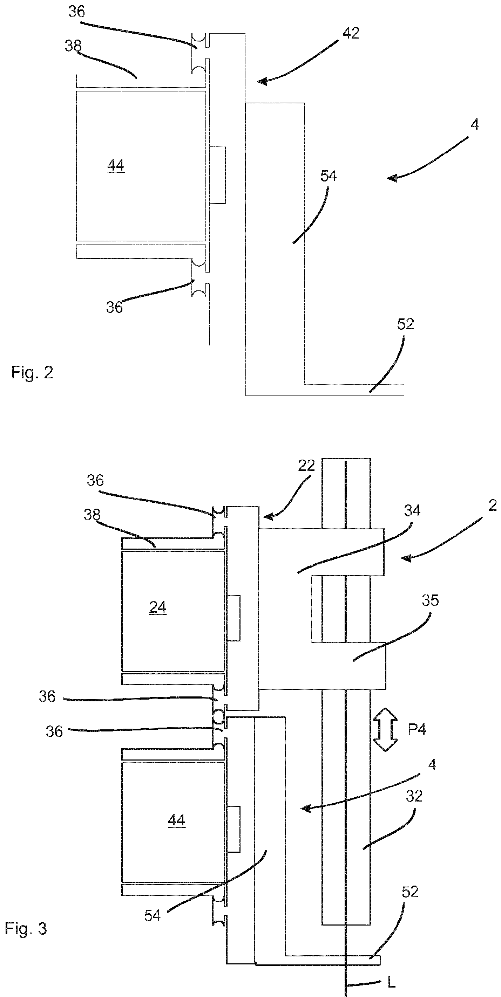

Figur 2 zeigt eine schematische Darstellung der zweiten Transporteinrichtung 4. Dabei ist wieder der umlaufende Träger 44 gezeigt, an dem beweglich das Transportelement 42 angeordnet ist. Dieses Transportelement 42 weist hier einen Träger 54 auf, an dem ein Halteelement 52, hier in Form einer Greifklammer, angeordnet ist. Diese Greifklammer ist dabei bevorzugt aktiv und weist besonders bevorzugt einen Antrieb auf, um die Greifklammer zu öffnen und zu schließen.

Die Bezugszeichen 36 beziehen sich auf Räder, mittels derer das Transportelement 42 gegenüber dem Träger 44 rollen kann. Das Bezugszeichen 38 kennzeichnet einen Tragebereich, der zum Führen der Halteelemente bzw. Transportelemente 42 dient.

Figur 3 zeigt eine Darstellung einer Anordnung der übereinander angeordneten ersten und zweiten Transporteinrichtungen 2 und 4. Auch die erste Transporteinrichtung 2 weist - wie oben erwähnt - einen umlaufenden Träger 24 auf, an dem die Transportelemente 22 beweglich angeordnet sind. Dabei weisen diese Transportelemente 22 jeweils einen Haltedorn 32 auf, der in Richtung des Doppelpfeils P4, d.h. nach oben und unten bewegbar ist, um in Mündungen von (nicht gezeigten) Kunststoffvorformlingen einzufahren. Das Bezugszeichen 35 kennzeichnet eine Führung für diesen Haltedorn 32. Dieser Haltedorn kann weiterhin ein (nicht gezeigtes) Zahnrad aufweisen, mittels dessen er gegenüber einer (nicht gezeigten) (Zahn)führung abrollen kann. Der Haltedorn 32 ist bevorzugt bezüglich seiner Längsrichtung L, bei der es sich gleichzeitig auch um eine Längsrichtung der zu erwärmenden Kunststoffvorformlinge handelt, drehbar.

Es wäre jedoch auch möglich, dass das Transportelement 2 einen aktiven Antrieb zum Drehen des Haltedorns 32 aufweist. Auch kann dieser Haltedorn (nicht gezeigte) Spreizmittel aufweisen, um einen Kunststoffvorformling klemmen zu können.

Daneben kann durch das Absinken des Haltedorns 32 in die Mündung des Kunststoffvorformlings auch eine Kopplung der beiden Transportelemente 22 und 24 (beispielsweise über den Kunststoffvorformling, aber auch über weitere Elemente) erfolgen. Auf diese Weise können die beiden Transportelemente 22 und 42 hinsichtlich ihrer Bewegung miteinander gekoppelt werden. Diese Kopplung kann bei einem Herausziehen des Haltedorns 32 wieder gelöst werden.

Die Anmelderin behält sich vor sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

### Bezugszeichenliste

- L: Längsrichtung
- P1: Transportpfad
- P2: Transportpfad
- P3: Transportpfad
- P4: Doppelpfeil
- 1: Vorrichtung
- 2: Transporteinrichtung
- 4: zweite Transporteinrichtung
- 8: Umformungseinrichtung
- 10: Kunststoffvorformling
- 16: dritte Transporteinrichtung
- 18: Erwärmungseinrichtungen
- 20: Kunststoffbehältnis
- 22: Transportelement
- 24: umlaufender Träger
- 26: magnetisches Element, magnetisches Antriebsmittel
- 28: magnetisches Element, magnetisches Antriebsmittel
- 32: Haltedorn
- 35: Führung
- 36: Rad
- 38: Tragebereich
- 42: Transportelement
- 44: umlaufender Träger
- 46: magnetisches Element
- 48: magnetisches Element
- 52: Halteelement/Greifelement
- 54: Träger
- 62: Transportelement
- 64: umlaufender Träger
- 66: Greifelement
- 82: Umformungsstation

## Patentansprüche

1. Vorrichtung (1) zum Behandeln von Behältnissen und insbesondere von Kunststoffbehältnissen, mit einer ersten Transporteinrichtung (2) welche einen umlaufenden Träger (24) aufweist, an dem eine erste Vielzahl von Transportelementen (22) beweglich angeordnet ist, welche jeweils wenigstens ein Haltemittel (32) zum Halten von Kunststoffvorformlingen (10) aufweisen und welche dazu geeignet und bestimmt sind, diese Kunststoffvorformlinge (10) entlang eines ersten Transportpfads (P1) zu transportieren, mit wenigstens einer Erwärmungseinrichtung (18), welche entlang des ersten Transportpfades (P1) angeordnet ist um die Kunststoffvorformlinge (10) wenigstens abschnittsweise während ihres Transports entlang des ersten Transportpfads (P1) zu erwärmen,
**dadurch gekennzeichnet, dass**
die Vorrichtung (1) eine zweite umlaufende Transporteinrichtung (4) aufweist, welche einen zweiten umlaufenden Träger (44) aufweist, an dem eine zweite Vielzahl von Transportelementen (42) angeordnet ist, welche jeweils wenigstens ein Haltemittel (52) zum Halten der Kunststoffvorformlinge (10) aufweisen und welche dazu geeignet und bestimmt sind, diese Kunststoffvorformlinge (10) entlang eines zweiten Transportpfads (P2) zu transportieren, wobei der zweite Transportpfad (P2) abschnittsweise parallel zu dem ersten Transportpfad (P1) verläuft und wobei an wenigstens einem Träger (24, 44) erste magnetische Antriebsmittel (26, 46) angeordnet sind, welche mit zweiten an den jeweiligen an diesem Träger (26, 46) angeordneten Transportelementen (22, 42) befindlichen magnetischen Antriebsmitteln (28, 48) zusammenwirken, um diese Transportelemente (22, 42) gegenüber dem Träger (26, 48) zu bewegen und wobei an wenigstens einem Träger (24, 44) angeordnete Transportelemente (22, 42) voneinander unabhängig gegenüber diesem Träger (24, 44) bewegbar sind, wobei die ersten Haltemittel (32) dazu geeignet und bestimmt sind, die Kunststoffvorformlinge (10) an ersten Bereichen (B1) der Kunststoffvorformlinge (10) zu greifen und die zweiten Haltemittel (52) dazu geeignet und bestimmt sind, die Kunststoffvorformlinge (10) an zweiten Bereichen (B2) der Kunststoffvorformlinge (10) zu greifen und sich die ersten Bereiche (B1) und die zweiten Bereiche (B2) voneinander unterscheiden und die Kunststoffvorformlinge (10) wenigstens zeitweise von Haltemitteln der ersten Transporteinrichtung (2) und von Haltemitteln der zweiten Transporteinrichtung (4) gehalten werden.

2. Vorrichtung (1) nach Anspruch 1,
**dadurch gekennzeichnet, dass**
an dem anderen Träger (44, 24) weitere erste magnetische Antriebsmittel (46) angeordnet sind, welche mit weiteren zweiten an den jeweiligen an diesem anderen Träger (44, 24) angeordneten Transportelementen (42, 22) befindlichen magnetischen Antriebsmitteln (48, 28) zusammenwirken, um diese Transportelemente (42, 22) zu bewegen und/oder wobei die an dem anderen Träger (44, 24) angeordneten weiteren zweiten Transportelemente (42, 22) voneinander unabhängig gegenüber dem anderen Träger (44, 24) bewegbar sind.

3. Vorrichtung (1) nach wenigstens einem der vorangegangenen Ansprüche,
**dadurch gekennzeichnet, dass**
sich der erste Transportpfad (P1) und der zweite Transportpfad (P2) abschnittsweise voneinander unterscheiden.

4. Vorrichtung (1) nach wenigstens einem der vorangegangenen Ansprüche,
**dadurch gekennzeichnet, dass**
die Vorrichtung eine Umformungseinrichtung (8) aufweist, welche entlang des zweiten Transportpfades (P2) angeordnet ist, und welche dazu geeignet und bestimmt ist, die Kunststoffvorformlinge (10) zu Kunststoffbehältnissen (20) umzuformen.

5. Vorrichtung (1) nach wenigstens einem der vorangegangenen Ansprüche,
**dadurch gekennzeichnet, dass**
wenigstens eine Transporteinrichtung (2, 4) dazu geeignet und bestimmt ist, die Kunststoffvorformlinge (10) getaktet zu transportieren.

6. Vorrichtung (1) nach wenigstens einem der vorangegangenen Ansprüche,
**dadurch gekennzeichnet, dass**
der erste Transportpfad (P1) oberhalb des zweiten Transportpfads (P2) angeordnet ist.

7. Vorrichtung (1) nach wenigstens einem der vorangegangenen Ansprüche,
**dadurch gekennzeichnet, dass**
wenigstens ein Haltemittel (32) drehbar angeordnet ist, derart, dass es eine Drehung der Kunststoffvorformlinge (10) bezüglich deren Längsachsen (L) bewirkt.

8. Verfahren zum Behandeln von Kunststoffbehältnissen, wobei Kunststoffvorformlinge (10) mittels einer ersten Transporteinrichtung (2) entlang eines ersten vorgegebenen Transportpfads (P1) transportiert werden, und diese erste Transporteinrichtung (2) einen ersten umlaufenden Träger (24), entlang dessen sich erste Transportelemente (22) mit Haltemitteln (32) zum Halten der Kunststoffvorformlinge (10) bewegen, aufweist und wobei die Kunststoffvorformlinge (10) wenigstens zeitweise während ihres Transports entlang des ersten Transportpfads (P1) erwärmt werden und wobei die Kunststoffvorformlinge (10) mittels einer zweiten Transporteinrichtung (4) entlang eines zweiten Transportpfads (P2) transportiert werden,
**dadurch gekennzeichnet, dass**
der erste Transportpfad (P1) und der zweite Transportpfad (P2) wenigstens abschnittsweise parallel verlaufen und der Transport entlang des zweiten Transportpfads wenigstens abschnittsweise getaktet verläuft, wobei an wenigstens einem Träger (24, 44) erste magnetische Antriebsmittel (26, 46) angeordnet sind, welche mit zweiten an den jeweiligen an diesem Träger (26, 46) angeordneten Transportelementen (22, 42) befindlichen magnetischen Antriebsmitteln (28, 48) zusammenwirken, um diese Transportelemente (22, 42) gegenüber dem Träger (26, 48) zu bewegen und wobei an wenigstens einem Träger (24, 44) angeordnete Transportelemente (22, 42) voneinander unabhängig gegenüber diesem Träger (24, 44) bewegbar sind, wobei die ersten Haltemittel (32) dazu geeignet und bestimmt sind, die Kunststoffvorformlinge (10) an ersten Bereichen (B1) der Kunststoffvorformlinge (10) zu greifen und die zweiten Haltemittel (52) dazu geeignet und bestimmt sind, die Kunststoffvorformlinge (10) an zweiten Bereichen (B2) der Kunststoffvorformlinge (10) zu greifen und sich die ersten Bereiche (B1) und die zweiten Bereiche (B2) voneinander unterscheiden und die Kunststoffvorformlinge (10) wenigstens zeitweise von Haltemitteln der ersten Transporteinrichtung (2) und von Haltemitteln der zweiten Transporteinrichtung (4) gehalten werden.

9. Verfahren nach Anspruch 8,
**dadurch gekennzeichnet, dass**
die Kunststoffvorformlinge während ihres Transports mit der zweiten Transporteinrichtung (4) mittels einer Umformungseinrichtung zu Kunststoffbehältnissen umgeformt werden.

10. Verfahren nach wenigstens einem der vorangegangenen Ansprüche,
**dadurch gekennzeichnet, dass**
die Kunststoffvorformlinge (10) mittels wenigstens einer Transporteinrichtung (2, 4) durch magnetische Kräfte bewegt werden.

## Claims

1. Apparatus (1) for processing containers and in particular plastic containers, having a first transport device (2) which has a circumferential carrier (24) on which a first plurality of transport elements (22) are arranged movably which in each case have at least one holding means (32) for holding plastic parisons (10) and which are suitable and intended to transport these plastic parisons (1) along a first transport path (P1), with at least one heating device (18) which is arranged along the first transport path (P1) in order to heat the plastic parisons (10) at least in sections during their transport along the first transport path (P1), **characterised in that**
the apparatus (1) has a second circumferential transport device (4) which has a second circumferential carrier (44) on which a second plurality of transport elements (42) are arranged, which in each case have at least one holding means (52) for holding the plastic parisons (10) and which are suitable and intended to transport these plastic parisons (10) along a second transport path (P2), wherein the second transport path (P2) extends in sections parallel to the first transport path (P1), wherein on at least one carrier (24, 44) first magnetic drive means (26, 46) are arranged which co-operate with second magnetic drive means (28, 48) located on the respective transport elements (22, 42) arranged on this carrier (26, 46), in order to move these transport elements (22, 42) relative to the carrier (26, 48), and wherein transport elements (22, 42) arranged on at least one carrier (24, 44) are movable independently of one another relative to this carrier (24, 44), wherein the first holding means (32) are suitable and intended for gripping the plastic parisons (10) on first regions (B1) of the plastic parisons (10) and the second holding means (52) are suitable and intended for gripping the plastic parisons (10) on a second region (B2) of the plastic parisons (10), wherein the first regions (B1) and the second regions (B2) are different from one another and the plastic preforms (10) are held at least at times by holding means of the first transport device (2) and by holding means of the second transport device (4).

2. Apparatus (1) according to claim 1,
**characterised in that**
on the other carrier (44, 24) further first magnetic drive means (46) are arranged which co-operate with further second magnetic drive means (48, 28) located on the respective transport elements (42, 22) arranged on this carrier (44, 24), in order to move these transport elements (42, 22), and/or wherein the further second transport elements (42, 22) arranged on the other carrier (44, 24) are movable independently of one another relative to the other carrier (44, 24).

3. Apparatus (1) according to at least one of the preceding claims, **characterised in that**
the first transport path (P1) and the second transport path (P2) differ from one another in sections.

4. Apparatus (1) according to at least one of the preceding claims, **characterised in that**
the apparatus has a transforming device (8) which is arranged along the second transport path (P2) and which is suitable and intended for transforming the plastic parisons (10) into plastic containers (20).

5. Apparatus (1) according to at least one of the preceding claims, **characterised in that**
at least one transport device (2, 4) is suitable and intended for transporting the plastic parisons (10) cyclically.

6. Apparatus (1) according to at least one of the preceding claims, **characterised in that**
the first transport path (P1) is arranged above the second transport path (P2).

7. Apparatus (1) according to at least one of the preceding claims, **characterised in that**
at least one holding means (32) is arranged rotatably in such a way that it effects a rotation of the plastic parisons (10) relative to their longitudinal axes (L).

8. Method for processing plastic containers, wherein plastic parisons (10) are transported by a first transport device (2) along a first predetermined transport path (P1) and this first transport device (2) has a first circumferential carrier (24), along which first transport elements (22) with holding means (32) for holding the plastic parisons (10) move, and wherein the plastic parisons (10) are heated at least at times during their transport along the first transport path (P1), and wherein the plastic parisons (10) are transported by a second transport device (4) along a second transport path (P2),
**characterised in that**
the first transport path (P1) and the second transport path (P2) extend at least in sections parallel and the transport takes place along the second transport path cyclically at least in sections, wherein on at least one carrier (24, 44) first magnetic drive means (26, 46) are arranged which co-operate with second magnetic drive means (28, 48) located on the respective transport elements (22, 42) arranged on this carrier (26, 46), in order to move these transport elements (22, 42) relative to the carrier (26, 48), and wherein transport elements (22, 42) arranged on at least one carrier (24, 44) are movable independently of one another relative to this carrier (24, 44), wherein the first holding means (32) are suitable and intended for gripping the plastic parisons (10) on first regions (B1) of the plastic parisons (10) and the second holding means (52) are suitable and intended for gripping the plastic parisons (10) on a second region (B2) of the plastic parisons (10), wherein the first regions (B1) and the second regions (B2) are different from one another and the plastic preforms (10) are held at least at times by holding means of the first transport device (2) and by holding means of the second transport device (4).

9. Method according to claim 8,
**characterised in that**
during the transport of the plastic parisons by the second transport device (4) they are transformed into plastic containers by a transforming device.

10. Method according to at least one of the preceding claims,
**characterised in that**
the plastic parisons (10) are moved by at least one transport device (2, 4) by magnetic forces.

## Revendications

1. Dispositif (1) de traitement de récipients et en particulier de récipients en matière plastique, avec un premier système de transport (2), lequel présente un support (24) circulant en périphérie, sur lequel est disposée de manière mobile une première pluralité d'éléments de transport (22), lesquels présentent respectivement au moins un moyen de maintien (32) destiné à maintenir des préformes en matière plastique (10) et lesquels sont adaptés pour et se destinent à transporter lesdites préformes en matière plastique (10) le long d'un premier trajet de transport (P1), avec au moins un système de chauffage (18), lequel est disposé le long du premier trajet de transport (P1) pour chauffer les préformes en matière plastique (10) au moins par endroits pendant leur transport le long du premier trajet de transport (P1),
**caractérisé en ce que**
le dispositif (1) présente un deuxième système de transport (4) circulant en périphérie, lequel présente un deuxième support (44) circulant en périphérie, sur lequel est disposée une deuxième pluralité d'éléments de transport (42), lesquels présentent respectivement au moins un moyen de maintien (52) destiné à maintenir lesdites préformes en matière plastique (10) et lesquels sont adaptés pour et se destinent à transporter lesdites préformes en matière plastique (10) le long d'un deuxième trajet de transport (P2), dans lequel le deuxième trajet de transport (P2) s'étend par endroits de manière parallèle au premier trajet de transport (P1) et dans lequel sont disposés sur au moins un support (24, 44) des premiers moyens d'entraînement magnétiques (26, 46), lesquels coopèrent avec des deuxièmes moyens d'entraînement magnétiques (28, 48) se trouvant sur les éléments de transport (22, 42) respectifs disposés sur ledit support (26, 46) pour déplacer lesdits éléments de transport (22, 42) par rapport au support (26, 48) et dans lequel des éléments de transport (22, 42) disposés sur au moins un support (24, 44) peuvent être déplacés indépendamment les uns des autres par rapport audit support (24, 44), dans lequel les premiers moyens de maintien (32) sont adaptés pour et se destinent à saisir les préformes en matière plastique (10) sur des premières zones (B1) des préformes en matière plastique (10) et les deuxièmes moyens de maintien (52) sont adaptés pour et se destinent à saisir les préformes en matière plastique (10) sur des deuxièmes zones (B2) des préformes en matière plastique (10) et les premières zones (B1) et les deuxièmes zones (B2) se distinguent les unes des autres et les préformes en matière plastique (10) sont maintenues au moins temporairement par des moyens de maintien du premier système de transport (2) et par des moyens de maintien du deuxième système de transport (4).

2. Dispositif (1) selon la revendication 1,
**caractérisé en ce que**
sont disposés, sur l'autre support (44, 24), d'autres premiers moyens d'entraînement magnétiques (46), lesquels coopèrent avec d'autres deuxièmes moyens d'entraînement magnétiques (48, 28) se trouvant sur les éléments de transport (42, 22) respectifs disposés sur ledit autre support (44, 24) pour déplacer lesdits éléments de transport (42, 22) et/ou dans lequel les autres deuxièmes éléments de transport (42, 22) disposés sur l'autre support (44, 24) peuvent être déplacés indépendamment les uns des autres par rapport à l'autre support (44, 24).

3. Dispositif (1) selon au moins l'une quelconque des revendications précédentes,
**caractérisé en ce que**
le premier trajet de transport (P1) et le deuxième trajet de transport (P2) se distinguent par endroits.

4. Dispositif (1) selon au moins l'une quelconque des revendications précédentes,
**caractérisé en ce que**
le dispositif présente un système de façonnage (8), lequel est disposé le long du deuxième trajet de transport (P2), et lequel est adapté pour et se destine à façonner les préformes en matière plastique (10) en des récipients en matière plastique (20).

5. Dispositif (1) selon au moins l'une quelconque des revendications précédentes,
**caractérisé en ce que**
au moins un système de transport (2, 4) est adapté pour et se destine à transporter de manière cadencée les préformes en matière plastique (10).

6. Dispositif (1) selon au moins l'une quelconque des revendications précédentes,
**caractérisé en ce que**
le premier trajet de transport (P1) est disposé au-dessus du deuxième trajet de transport (P2).

7. Dispositif (1) selon au moins l'une quelconque des revendications précédentes,
**caractérisé en ce que**
au moins un moyen de maintien (32) est disposé de manière à pouvoir tourner de telle manière qu'il entraîne une rotation des préformes en matière plastique (10) par rapport à leurs axes longitudinaux (L).

8. Procédé de traitement de récipients en matière plastique, dans lequel des préformes en matière plastique (10) sont transportées le long d'un premier trajet de transport (P1) prédéfini au moyen d'un premier système de transport (2), et ledit premier système de transport (2) présente un premier support (24) circulant en périphérie, le long duquel des premiers éléments de transport (22) se déplacent avec des moyens de maintien (32) destinés à maintenir les préformes en matière plastique (10) et dans lequel les préformes en matière plastique (10) sont chauffées au moins temporairement pendant leur transport le long du premier trajet de transport (P1) et dans lequel les préformes en matière plastique (10) sont transportées le long d'un deuxième trajet de transport (P2) au moyen d'un deuxième système de transport (4),
**caractérisé en ce que**
le premier trajet de transport (P1) et le deuxième trajet de transport (P2) s'étendent de manière parallèle par endroits et le transport s'étend de manière cadencée au moins par endroits le long du deuxième trajet de transport, dans lequel sont disposés sur au moins un support (24, 44) des premiers moyens d'entraînement magnétiques (26, 46), lesquels coopèrent avec des deuxièmes moyens d'entraînement magnétiques (28, 48) se trouvant sur les éléments de transport (22, 42) respectifs disposés sur ledit support (26, 46) pour déplacer lesdits éléments de transport (22, 42) par rapport au support (26, 48) et dans lequel des éléments de transport (22, 42) disposés sur au moins un support (24, 44) peuvent être déplacés indépendamment les uns des autres par rapport audit support (24, 44), dans lequel les premiers moyens de maintien (32) sont adaptés pour et se destinent à saisir les préformes en matière plastique (10) sur des premières zones (B1) des préformes en matière plastique (10) et les deuxièmes moyens de maintien (52) sont adaptés pour et se destinent à saisir les préformes en matière plastique (10) sur des deuxièmes zones (B2) des préformes en matière plastique (10) et les premières zones (B1) et les deuxièmes zones (B2) se distinguent les unes des autres et les préformes en matière plastique (10) sont maintenues au moins temporairement par des moyens de maintien du premier système de transport (2) et par des moyens de maintien du deuxième système de transport (4).

9. Procédé selon la revendication 8,
**caractérisé en ce que**
les préformes en matière plastique sont façonnées pendant leur transport avec le deuxième système de transport (4) au moyen d'un système de façonnage en des récipients en matière plastique.

10. Procédé selon au moins l'une quelconque des revendications précédentes,
**caractérisé en ce que**
les préformes en matière plastique (10) sont déplacées par des forces magnétiques au moyen d'au moins un système de transport (2, 4).
